# EUROPEAN PATENT SPECIFICATION

(11) **EP 3 623 174 B1**
(45) Date of publication and mention of the grant of the patent: **15.03.2023**
(21) Application number: 18797837.4
(22) Date of filing: 15.03.2018
(51) Int. Cl.: B60C 7/00, B60B 9/04, B60C 7/18

(54) **NON-PNEUMATIC TIRE**
LUFTLOSER REIFEN
PNEU NON PNEUMATIQUE

(30) Priority: 11.05.2017 JP 2017094665
(43) Date of publication of application: 18.03.2020
(73) Proprietor: Bridgestone Corporation, Tokyo 104-8340 (JP)
(72) Inventor: NISHIDA Masashi, Tokyo 104-8340 (JP)
(74) Representative: Marks & Clerk LLP
(86) International application number: PCT/JP2018/010229
(87) International publication number: WO 2018/207460

(56) References cited:
- EP-A1- 3 000 619
- EP-A1- 3 162 589
- WO-A1-2016/098477
- WO-A1-2016/098477
- WO-A1-2016/114168
- CN-U- 201 580 214
- JP-A- 2010 234 865
- JP-A- 2012 011 971
- JP-A- 2014 008 952
- JP-A- 2014 213 789
- JP-A- 2015 116 868
- JP-A- 2016 008 012
- US-A- 1 037 412
- US-A- 1 622 848
- US-A- 5 676 900

## Description

### [Technical Field]

The present invention relates to a non-pneumatic tire.

Priority is claimed on Japanese Patent Application No. 2017-094665, filed May 11, 2017.

### [Background Art]

In the related art, for example, the non-pneumatic tire described in Patent Document 1 is known. The non-pneumatic tire includes an inner cylinder attached to an axle shaft, an outer cylinder configured to surround the inner cylinder from the outside in a tire radial direction, a linking member configured to link the inner cylinder to the outer cylinder, and a tread member externally fitted onto the outer cylinder. The outer cylinder includes an outer circumferential section positioned on a tire equatorial line, side sections positioned on both sides in a tire width direction with respect to the outer circumferential section, and a shoulder section configured to connect the outer circumferential section to the side sections. The tread member covers the outer circumferential section, the side sections, and the shoulder section of the outer cylinder.

According to this non-pneumatic tire, the tread member covers the side sections of the outer cylinder. Thus, it is possible to prevent damage to the outer cylinder occurring when the non-pneumatic tire rides over a curb.

### [Citation List]

### [Patent Document]

[Patent Document 1]
Japanese Unexamined Patent Application, First Publication No. 2016-113078. Attention is also drawn to the disclosures of US1,037,412A and WO2016/098477.

### [Summary of Invention]

### [Technical Problem]

However, in the above-described non-pneumatic tire in the related art, damage to the tread member is likely to occur when the non-pneumatic tire collides with a curb.

The present invention was made in view of the above-described circumstances and an object of the present invention is to minimize occurrence of damage to a tread member when a non-pneumatic tire collides with a curb.

A non-pneumatic tire according to the present is as claimed in independent claim 1. Optional features are set out in the dependent claims.

### [Effects of Invention]

According to the present invention, it is possible to minimize occurrence of damage to a tread member when a non-pneumatic tire collides with a curb.

### [Brief Description of Drawings]

Fig. 1 is a side view of a non-pneumatic tire according to a first embodiment of the present invention.
Fig. 2 is a cross-sectional view (a vertical cross-sectional view) taken along line A-A shown in Fig. 1.
Fig. 3 is an exploded perspective view of a non-pneumatic tire according to a second embodiment of the present invention.
Fig. 4 is a side view of the non-pneumatic tire shown in Fig. 3.
Fig. 5 is an enlarged view of a part of Fig. 4.
Fig. 6 is a vertical cross-sectional view of a main part including an outer cylinder and a tread member in the non-pneumatic tire shown in Fig. 3.
Fig. 7 is a vertical cross-sectional view of a main part of a non-pneumatic tire according to a third embodiment of the present invention.
Fig. 8 is a vertical cross-sectional view of a main part of a non-pneumatic tire according to a fourth embodiment of the present invention.
Fig. 9 is a vertical cross-sectional view of a main part of a non-pneumatic tire according to a fifth embodiment of the present invention.
Fig. 10 is a vertical cross-sectional view of a main part of a non-pneumatic tire according to a sixth embodiment of the present invention.
Fig. 11 is a vertical cross-sectional view of a main part of a non-pneumatic tire according to a seventh embodiment of the present invention.
Fig. 12 is a vertical cross-sectional view of a main part of a non-pneumatic tire according to an eighth embodiment of the present invention.
Fig. 13 is a vertical cross-sectional view of a main part of a non-pneumatic tire according to a modification of the present invention.

### [Description of Embodiments]

### (First embodiment)

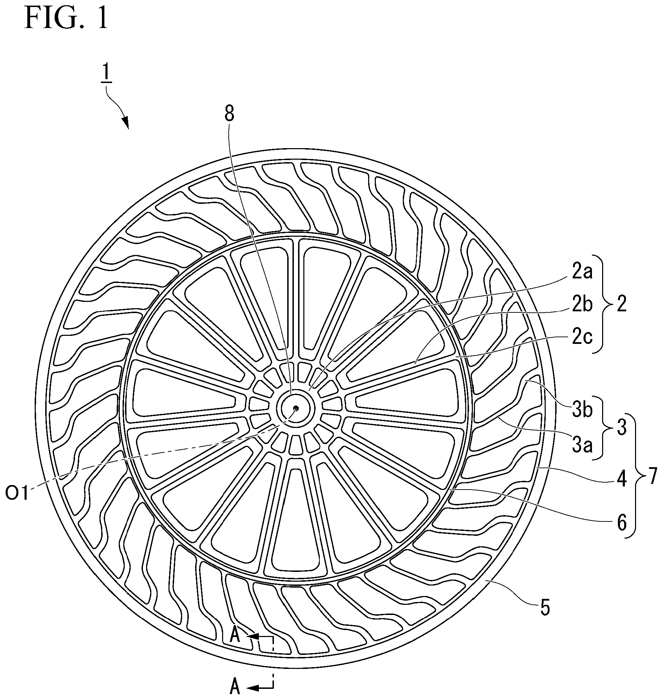

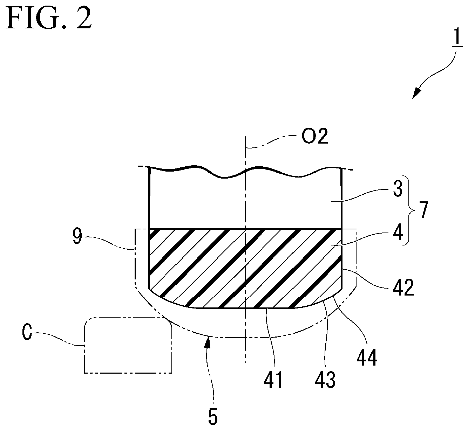

A constitution of a non-pneumatic tire according to this embodiment will be described below with reference to Figs. 1 and 2. Note that, in each drawing used in the following description, the scale is appropriately changed to set each member to have a distinguishable size. Furthermore, in each drawing, hatching may be omitted to facilitate the viewing of the drawings in some cases when an outer cylinder 4 and a tread member 5 which will be described later are viewed in a vertical-section view.

As illustrated in Fig. 1, a non-pneumatic tire 1 includes a wheel section 2 attachable to an axle shaft and a tire section 7 disposed on an outer circumference of the wheel section 2.

This non-pneumatic tire 1 is used for bicycles, two-wheeled vehicles, automobiles, and the like (hereinafter generally referred to simply as a "vehicle"), particularly, a vehicle (specifically, two-wheeled vehicles, three-wheeled vehicles, and the like) which travels while a vehicle body is tilted (banked) in a leftward/rightward direction of a vehicle body (a tire width direction which will be described later).

Here, the wheel section 2 is formed in a disk shape, the tire section 7 is formed in an annular shape, and each central axis is positioned on a common axis. This common axis is referred to as a central axis O1 and a direction along the central axis O1 is referred to as a tire width direction. Furthermore, in a side view when viewed from the tire width direction, a direction around the central axis O1 as a center is referred to as a tire circumferential direction and a direction orthogonal to this central axis O1 is referred to as a tire radial direction.

As illustrated in Fig. 2, the wheel section 2, the tire section 7, and the tread member 5, which will be described later, are formed line-symmetrically as a whole about a central line 02 which passes through a central portion (a tire equatorial line) in the tire width direction. In a vertical cross-sectional view in both the tire width direction and the tire radial direction, a direction in the tire width direction toward this central line 02 is referred to as inward in the tire width direction and a direction in the tire width direction away from this central line 02 is referred to as outward in the tire width direction.

As illustrated in Fig. 1, the wheel section 2 includes a tubular boss 8 extending in the tire width direction about the central axis O1, an installation cylinder section 2a fixed to an outer circumferential surface of the boss 8, an exterior cylinder section 2c configured to surround the installation cylinder section 2a from the outside in the tire radial direction, and a plurality of ribs 2b configured to link the installation cylinder section 2a to the exterior cylinder section 2c.

In this embodiment, the boss 8 is made of aluminum. The boss 8 is rotatably supported by the axle shaft so that the wheel section 2 is attachable to the axle shaft. It should be noted that the boss 8 may be made of a metal other than aluminum or a non-metal. In the tire width direction, the width of the boss 8 is larger than widths of the installation cylinder section 2a, the plurality of ribs 2b, and the exterior cylinder section 2c.

The installation cylinder section 2a and the exterior cylinder section 2c are disposed coaxially with the boss 8. The plurality of ribs 2b are disposed, for example, at equal intervals in the tire circumferential direction. The plurality of ribs 2b extend radially about the boss 8.

In this embodiment, the installation cylinder section 2a, the plurality of ribs 2b, and the exterior cylinder section 2c are integrally made of a thermoplastic resin. Thus, the wheel section 2 can be molded through injection molding and is appropriate for mass production.

It should be noted that the boss 8, the installation cylinder section 2a, the plurality of ribs 2b, and the exterior cylinder section 2c may be formed separately. Furthermore, the installation cylinder section 2a, the plurality of ribs 2b, and the exterior cylinder section 2c may be made of materials other than a thermoplastic resin.

The tire section 7 includes an inner cylinder 6 externally fitted onto the exterior cylinder section 2c of the wheel section 2, the outer cylinder 4 configured to surround the inner cylinder 6 from the outside in the tire radial direction, and elastically deformable linking members 3 configured to link the inner cylinder 6 to the outer cylinder 4 so that they are displaceable. The tread member 5 is fitted onto an outer circumferential surface of the outer cylinder 4.

The inner cylinder 6 is attachable to the axle shaft with the wheel section 2 therebetween. Central axes of the inner cylinder 6 and the outer cylinder 4 are disposed coaxially with the central axis O1. The inner cylinder 6, the linking members 3, and the outer cylinder 4 are disposed in the tire width direction in a state in which central portions thereof coincide with each other in the tire width direction.

In this embodiment, the inner cylinder 6, the linking members 3, and the outer cylinder 4 are integrally made of a thermoplastic resin. Thus, the tire section 7 can be molded through injection molding and is appropriate for mass production. Examples of the thermoplastic resin include only one kind of resin, a mixture containing two or more kinds of resin, or a mixture one or more kinds of resins and containing one or more kinds of elastomer, and the thermoplastic resin may include additives, such as anti-aging agents, plasticizers, fillers, or pigments. In this way, it is possible to secure a degree of freedom concerning the design of the tire section 7 by integrally forming the inner cylinder 6, the linking members 3, and the outer cylinder 4 using a thermoplastic resin. Thus, for example, various shapes of an outer circumferential section 41, side sections 42, and a shoulder section 43 of the outer cylinder 4 which will be described later can be easily realized.

The tire section 7 and the wheel section 2 may be formed integrally and may be formed separately. It should be noted that the wheel section 2 has a function of linking the boss 8 to the tire section 7 and the tire section 7 is elastically deformable and has a function of absorbing vibrations transmitted from the ground to the boss 8. In this way, since the wheel section 2 and the tire section 7 have different functions, the wheel section 2 and the tire section 7 may be made of different materials. For example, the tire section 7 may be made of a material having a relatively lower elastic modulus to ensure vibration absorption performance and the wheel section 2 may be made of a material having an elastic modulus larger than that of the tire section 7 to ensure fastness. Furthermore, for example, the wheel section 2 may be made of a material having a relatively lower specific gravity and a weight of the entire non-pneumatic tire 1 may be reduced.

The tread member 5 is made of, for example, vulcanized rubber obtained by vulcanizing natural rubber and/or a rubber composition, a thermoplastic material, or the like. Examples of the thermoplastic material include thermoplastic elastomers, thermoplastic resins, and the like. Examples of the thermoplastic elastomers include amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), crosslinked thermoplastic rubber (TPV), other thermoplastic elastomers (TPZ), and the like defined in Japanese Industrial Standard JIS K6418.

Examples of the thermoplastic resins include urethane resins, olefin resins, vinyl chloride resins, polyamide resins, or the like. It should be noted that it is desirable that the tread member 5 be made of vulcanized rubber in view of wear resistance.

The linking members 3 are formed in a rectangular plate shape in which the linking members 3 are bent as a whole, front and rear surfaces thereof are directed in the tire circumferential direction, and side surfaces thereof are directed in the tire width direction. The linking members 3 are made of an elastically deformable material and link an outer circumferential surface side of the inner cylinder 6 to an inner circumferential surface side of the outer cylinder 4 so that they are relatively elastically displaceable. The plurality of linking members 3 are disposed at equal intervals in the tire circumferential direction.

Each of the plurality of linking members 3 has an inner section 3a connected to the inner cylinder 6 and an outer section 3b connected to the outer cylinder 4. The inner section 3a and the outer section 3b are connected to each other at a central portion of the linking members 3 in the tire radial direction and intersect at an obtuse angle at a connection section when viewed in a side view.

A thickness of the inner section 3a in the tire circumferential direction is smaller than a thickness of the outer section 3b in the tire circumferential direction. The thickness of the outer section 3b in the tire circumferential direction gradually increases as it goes outward in the tire radial direction.

It should be noted that a form of the linking members 3 is not limited to the example illustrated in the drawings, and other constitutions may be adopted as long as the linking members 3 can be elastically deformed and the tire functions as a non-pneumatic tire. For example, in the case of a disk-shaped linking member between the inner cylinder 6 and the outer cylinder 4, a constitution in which the disk-shaped linking member is cut into a honeycomb shape, a constitution in which a plate-like linking member is disposed radially about the axle shaft, a constitution in which radial linking members are linked using an intermediate member, and the like may be adopted.

Here, in this embodiment, as illustrated in Fig. 2, the outer cylinder 4 includes the outer circumferential section 41 disposed on the tire equatorial line (the central line 02), the side sections 42 positioned on both sides in the tire width direction with respect to the outer circumferential section 41, and the shoulder section 43 configured to connect the outer circumferential section 41 to the side sections 42.

The outer circumferential section 41 is an outer end portion of the outer cylinder 4 in tire radial direction. The outer circumferential section 41 is formed in a straight linear form in which the outer circumferential section 41 extends in the tire width direction when viewed in the vertical cross-sectional view. The outer circumferential section 41 is formed line-symmetrically in the tire width direction with respect to the tire equatorial line when viewed in the vertical cross-sectional view.

The side sections 42 are outer end portions of the outer cylinder 4 in the tire width direction and the pair of side sections 42 are disposed.

The side sections 42 is positioned further inward in the tire radial direction than the outer circumferential section 41. The side sections 42 are formed in a straight linear form in which the side sections 42 extend in the tire radial direction when viewed in the vertical cross-sectional view. The pair of side sections 42 are formed line-symmetrically in the tire width direction with respect to the tire equatorial line when viewed in the vertical cross-sectional view.

The shoulder section 43 is chamfered over the entire circumference in the tire circumferential direction. The shoulder section 43 gradually extends inward in the tire radial direction as it goes outward in the tire width direction when viewed in the vertical cross-sectional view. The shoulder section 43 is formed in a curved shape in which the shoulder section 43 protrudes outward in the tire width direction and outward in the tire radial direction when viewed in the vertical cross-sectional view. The shoulder section 43 is subjected to so-called R-chamfering.

The shoulder section 43 is formed of one circular arc section 44 (fillet) having a single curvature when viewed in the vertical cross-sectional view. The circular arc section 44 is in contact with the outer circumferential section 41 from the outside in the tire width direction and the outer circumferential section 41 is positioned on a tangent line in the circular arc section 44. Thus, the outer circumferential section 41 is smoothly connected to the circular arc section 44 without a step. On the other hand, contact points between the circular arc section 44 and the side sections 42 form corner portions when viewed in the vertical cross-sectional view. The circular arc section 44 is connected to the side sections 42 with steps.

It should be noted that an inner circumferential surface of the outer cylinder 4 is formed in a straight linear form in which the inner circumferential surface extends in the tire width direction when viewed in the vertical cross-sectional view.

An elastic modulus of a material forming the tread member 5 is smaller than an elastic modulus of a material forming the tire section 7. An outer circumferential surface of the tread member 5 is formed in a curved shape in which the outer circumferential surface thereof protrudes outward in the tire radial direction when viewed in the vertical cross-sectional view.

The tread member 5 covers the outer circumferential section 41, the side sections 42, and the shoulder section 43 in the outer cylinder 4. The tread member 5 is formed to have one annular body in which the tread member 5 covers the outer circumferential section 41, the side sections 42, and the shoulder section 43 over the entire region thereof.

A pair of protective sections 9 which are portions configured to cover the side sections 42 in the tread member 5 are provided such that the pair of protective sections 9 sandwich the outer cylinder 4 in the tire width direction. Both end portions of the protective sections 9 in the tire radial direction are free ends which open and are exposed in the tire radial direction and the movement of the both end portions in the tire radial direction is not restricted. In other words, inner end portions of the protective sections 9 in the tire radial direction are not fixed ends in which the movement of the inner end portions inward in the tire radial direction is restricted.

As described above, according to the non-pneumatic tire 1 associated with this embodiment, the shoulder section 43 of the outer cylinder 4 is chamfered. Therefore, when the non-pneumatic tire 1 collides with a curb C and the tread member 5 is disposed between the curb C and the shoulder section 43 of the outer cylinder 4, it is possible to relax the compressive stress occurring in the tread member 5. Thus, it is possible to minimize occurrence of damage to the tread member 5.

Also, when the tread member 5 is disposed between the curb C and the shoulder section 43 of the outer cylinder 4, the protective sections 9 of the tread member 5 attempts to swell inward in the tire radial direction. At this time, for example, if the outer cylinder 4 or the like is positioned on an inner side in the tire radial direction with respect to the protective sections 9, the displacement of the end portions positioned inside the protective sections 9 in the tire radial direction is restricted, the end portions function as fixed ends, and the swelling deformation of the protective sections 9 in the tire radial direction is restricted. However, the tread member 5 covers the side sections 42 of the outer cylinder 4 over the entire length thereof in the tire radial direction so that the displacement of the end portions positioned inside the protective sections 9 in the tire radial direction is not restricted, the end portions function as free ends, and the above-described swelling deformation of the tread member 5 is allowed. Thus, it is possible to further minimize occurrence of damage to the tread member 5.

Also, the outer circumferential section 41 of the outer cylinder 4 is formed in a straight linear form in which the outer circumferential section 41 extends in the tire width direction when viewed in the vertical cross-sectional view. Therefore, it is possible to secure a thickness of the tread member 5 while minimizing a thickness of the outer cylinder 4 in the tire equatorial line, compared with a case in which the outer circumferential section 41 of the outer cylinder 4 is formed in a curved shape in which the outer circumferential section 41 thereof protrudes outward in the tire radial direction when viewed in the vertical cross-sectional view. Thus, it is possible to increase the lifespan of a part while ensuring riding comfort.

Also, the shoulder section 43 of the outer cylinder 4 gradually extends inward in the tire radial direction as it goes outward in the tire width direction when viewed in the vertical cross-sectional view. Therefore, in a portion in the tread member 5 positioned outside the outer cylinder 4 in the tire radial direction with respect to the shoulder section 43 (hereinafter referred to as a "shoulder portion of the tread member 5"), the thickness of the tread member 5 can be reduced. Furthermore, in the shoulder portion of the tread member 5, the thickness of the tread member 5 can be gradually reduced outward from the inner side thereof in the tire width direction. Thus, it is possible to minimize an increase in rolling resistance with respect to an input with a large camber angle, such as cornering.

Also, the shoulder section 43 of the outer cylinder 4 is formed in a curved shape when viewed in the vertical cross-sectional view.

Therefore, it is possible to further relax the compressive stress occurring in the tread member 5 and it is possible to effectively minimize occurrence of damage to the tread member 5.

Furthermore, the outer circumferential surface of the tread member 5 is formed in a curved shape in which the outer circumferential surface thereof protrudes outward in the tire radial direction when viewed in the vertical cross-sectional view. Therefore, for example, even if the camber angle is increased in cornering or the like, it is possible to secure a ground contact area for the non-pneumatic tire 1.

In addition, the shoulder section 43 of the outer cylinder 4 is formed in a curved shape in which the shoulder section 43 thereof protrudes outward in the tire width direction and outward in the tire radial direction when viewed in the vertical cross-sectional view. Therefore, as described above, when the camber angle is increased, it is possible to ground the shoulder section 43 of the outer cylinder 4 through the tread member 5 without a sense of incongruity and to improve riding comfort.

### (Second embodiment)

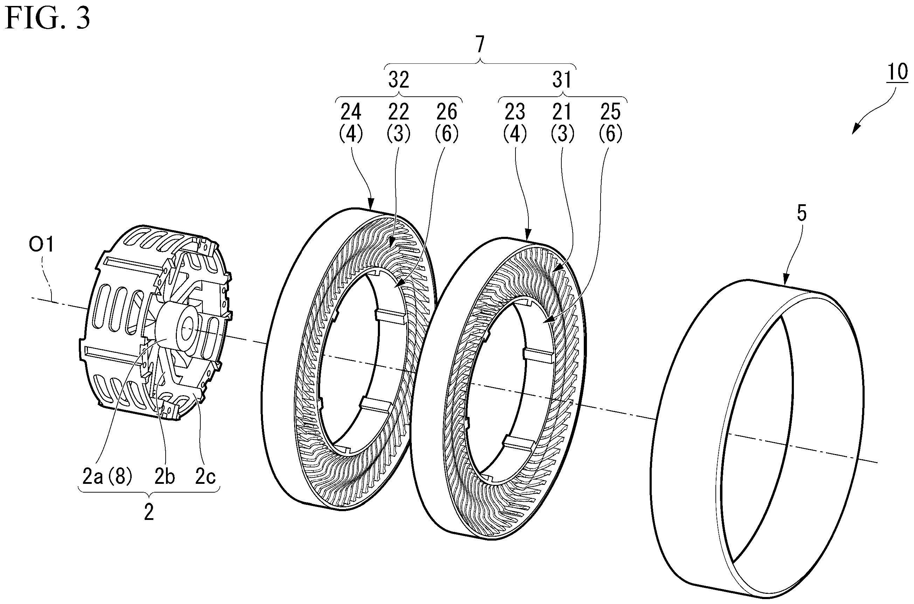

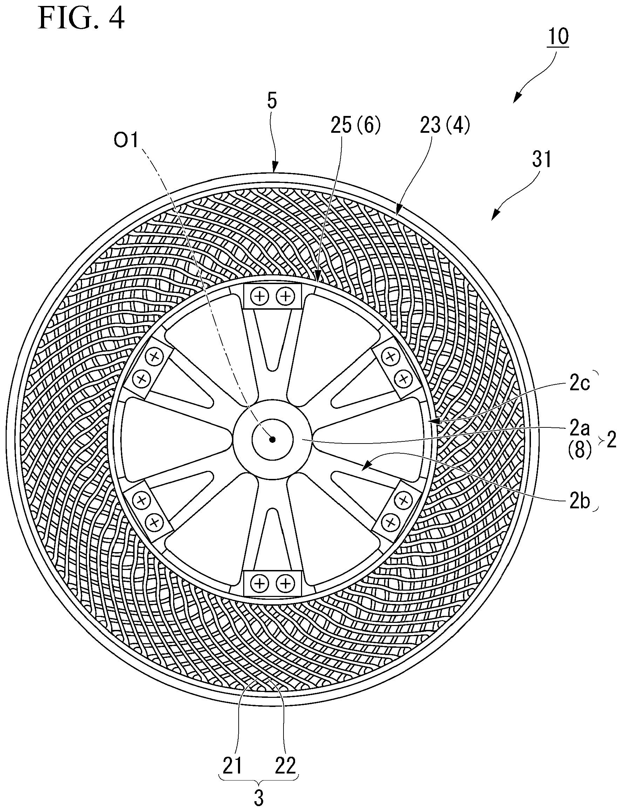

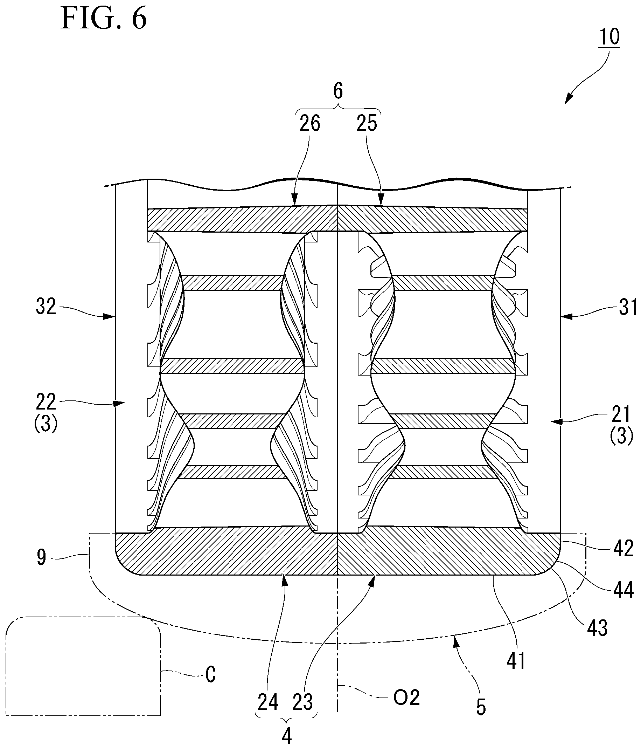

A non-pneumatic tire according to a second embodiment associated with the present invention will be described below with reference to Figs. 3 to 6.

It should be noted that constituent elements of the second embodiment that are the same as those of the first embodiment will be denoted with reference numerals that are the same as those of the first embodiment, description thereof will be omitted, and only differences will be described.

In a non-pneumatic tire 10 according to this embodiment, as illustrated in Fig. 3, a boss 8 and an installation cylinder section 2a are integrally made of the same material. Furthermore, linking members 3 include first linking plates 21 and second linking plates 22 configured to link an outer circumferential surface of an inner cylinder 6 to an inner circumferential surface of an outer cylinder 4. Both of the first linking plates 21 and the second linking plates 22 are plate members which can elastically deform.

The plurality of first linking plates 21 are disposed in the tire circumferential direction at positions on one side in the tire width direction. The plurality of second linking plates 22 are disposed in the tire circumferential direction at positions on the other side in the tire width direction. That is to say, the first linking plates 21 and the second linking plates 22 are disposed at intervals in the tire width direction and the plurality of first linking plates 21 and the plurality of second linking plates 22 are disposed in the tire circumferential direction at the respective positions.

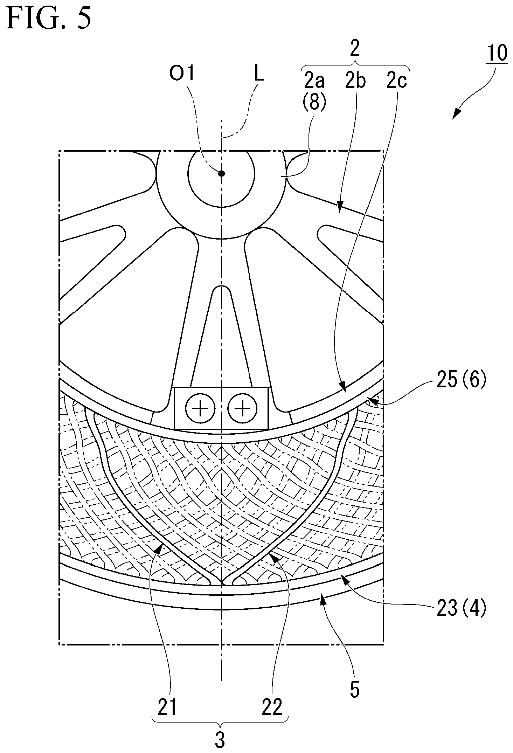

As illustrated in Fig. 5, one end portions (outer end portions) of the first linking plates 21 linked to the outer cylinder 4 are positioned on one side in the tire circumferential direction relative to the other end portions (inner end portions) thereof linked to the inner cylinder 6. On the other hand, one end portions (outer end portions) of the second linking plates 22 linked to the outer cylinder 4 are positioned on the other side in the tire circumferential direction relative to the other end portions (inner end portions) thereof linked to the inner cylinder 6. The other end portions of the first linking plates 21 and the second linking plates 22 are individually linked to positions on the one sides and the other sides in the tire circumferential direction at the same distance from each other about the central axis O1 from positions opposite to the one end portions in the tire radial direction in the outer circumferential surface of the inner cylinder 6 when viewed in a tire side view. When viewed in the tire side view, the linking members 3 have a shape in which the linking members 3 are line-symmetrically formed using an imaginary line L which extends in the tire radial direction and passes through the one end portions of the first linking plates 21 and the second linking plates 22, as an axis of symmetry.

Incidentally, as illustrated in Fig. 3, the inner cylinder 6 is divided into a first inner cylinder 25 positioned on one side in the tire width direction and a second inner cylinder 26 positioned on the other side in the tire width direction. Similarly, the outer cylinder 4 is divided into a first outer cylinder 23 positioned on one side in the tire width direction and a second outer cylinder 24 positioned on the other side in the tire width direction. The outer cylinder 4 is formed by linking end portions of the first and second outer cylinders 23 and 24 in the tire width direction disposed adjacent to each other in the tire width direction.

In the example illustrated in the drawings, each of the inner cylinder 6 and the outer cylinder 4 is divided at the central portion in the tire width direction (the tire equatorial line or the central line 02).

The first inner cylinder 25 and the first outer cylinder 23 are integrally formed with the first linking plates 21, for example, through injection molding. The second inner cylinder 26 and the second outer cylinder 24 are integrally formed with the second linking plates 22, for example, through injection molding.

Hereinafter, a unit obtained by integrally forming the first inner cylinder 25, the first outer cylinder 23, and the first linking plates 21 is referred to as a first division case body 31 and a unit obtained by integrally forming the second inner cylinder 26, the second outer cylinder 24, and the second linking plates 22 is referred to as a second division case body 32.

The first division case body 31 and the second division case body 32 have the same shape and the same size. When the first division case body 31 and the second division case body 32 are integrally linked to each other, end edges of the first outer cylinder 23 and the second outer cylinder 24 in the tire width direction are butted together and linked in a state in which directions of the first division case body 31 and the second division case body 32 are opposite to each other in the tire width direction while the first division case body 31 and the second division case body 32 are aligned in the tire circumferential direction so that the linking members 3 are line-symmetrically formed as described above when viewed in the tire side view.

After that, the non-pneumatic tire 10 can be obtained by providing the tread member 5 to the first division case body 31 and the second division case body 32 combined together.

### (Third embodiment)

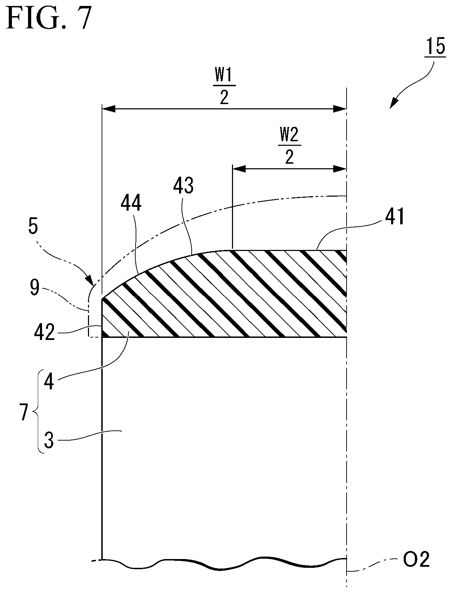

A non-pneumatic tire 15 according to a third embodiment associated with the present invention will be described below with reference to Fig. 7.

It should be noted that constituent elements of the third embodiment that are the same as those of the first embodiment will be denoted with reference numerals that are the same as those of the first embodiment, description thereof will be omitted, and only differences will be described.

In the non-pneumatic tire 15 according to this embodiment, when the width of an outer cylinder 4 in the tire width direction is set to W1 and the width of an outer circumferential section 41 in the tire width direction is set to W2, 0.1≤W2/W1≤0.6 is satisfied. The width W1 is a distance between the pair of side sections 42 in the tire width direction.

As described above, according to the non-pneumatic tire 15 associated with this embodiment, 0.1≤W2/W1≤0.6 is satisfied. Thus, it is possible to secure riding comfort regardless of a magnitude of the camber angle. That is to say, when W2/W1 is smaller than 0.1, a size of the outer circumferential section 41 in the outer cylinder 4 is too small, a thickness of the tread member 5 decreases in the tire equatorial line, and the camber angle is small, riding comfort is likely to not to be able to be ensured. Furthermore, when W2/W1 is larger than 0.6, a size of the shoulder section 43 of the outer cylinder 4 is too small, a thickness of the shoulder portion in the tread member 5 decreases, and the camber angle is large, riding comfort is likely to not to be able to be ensured.

### (Fourth embodiment)

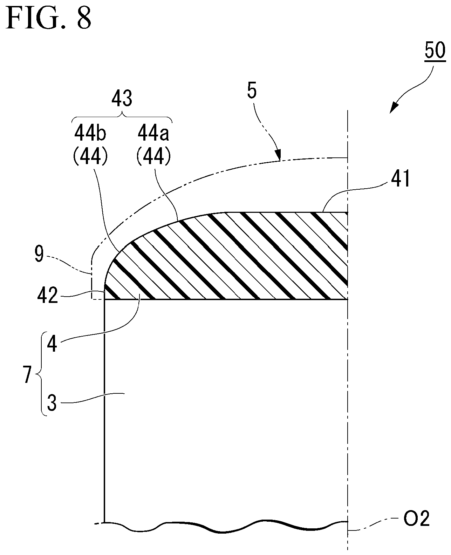

A non-pneumatic tire 50 according to a fourth embodiment associated with the present invention will be described below with reference to Fig. 8.

It should be noted that constituent elements of the fourth embodiment that are the same as those of the third embodiment will be denoted with reference numerals that are the same as those of the third embodiment, description thereof will be omitted, and only differences will be described.

In the non-pneumatic tire 50 according to this embodiment, a plurality of (two in the example illustrated in the drawings) circular arc sections 44 are disposed in the tire width direction. A shoulder section 43 of an outer cylinder 4 is formed of the plurality of circular arc sections 44 over the entire region in the tire width direction. The plurality of circular arc sections 44 have difference curvatures when viewed in the vertical cross-sectional view. In this embodiment, when viewed in the vertical cross-sectional view, the plurality of circular arc sections 44 are disposed such that the circular arc sections 44 adjacent to each other in the tire width direction have a common tangent line at contact points between the circular arc sections 44, in other words, the circular arc sections 44 adjacent to each other in the tire width direction are in contact with each other. In the plurality of circular arc sections 44, the curvature gradually increases from the circular arc sections 44 positioned on an inner side in the tire width direction toward the circular arc sections 44 positioned on an outer side in the tire width direction. If a curvature of a first circular arc section 44a positioned on the inner side in the tire width direction is set to R1 and a curvature of a second circular arc section 44b positioned on the outer side in the tire width direction is set to R2, R2>R1 is satisfied. When viewed in the vertical cross-sectional view, the second circular arc section 44b is in contact with a side section 42 from the outer side in the tire radial direction and the side sections 42 is positioned on a tangent line in the second circular arc section 44b. The second circular arc section 44b is smoothly connected to the side section 42 without a step.

As described above, according to the non-pneumatic tire 50 associated with this embodiment, in the plurality of circular arc sections 44, the curvature gradually increases from the circular arc sections 44 positioned on the inner side in the tire width direction toward the circular arc sections 44 positioned on the outer side in the tire width direction. Thus, it is possible to further relax the compressive stress occurring in the tread member 5.

Also, the shoulder section 43 of the outer cylinder 4 is formed of the plurality of circular arc sections 44 over the entire region in the tire width direction. Therefore, by disposing the plurality of circular arc sections 44 so that the plurality of circular arc sections 44 adjacent to each other in the tire width direction are in contact with each other when viewed in the vertical cross-sectional view, it is possible to smoothly form the shoulder section 43 of the outer cylinder 4 without a step. Thus, it is possible to further relax the compressive stress occurring in the tread member 5.

### (Fifth embodiment)

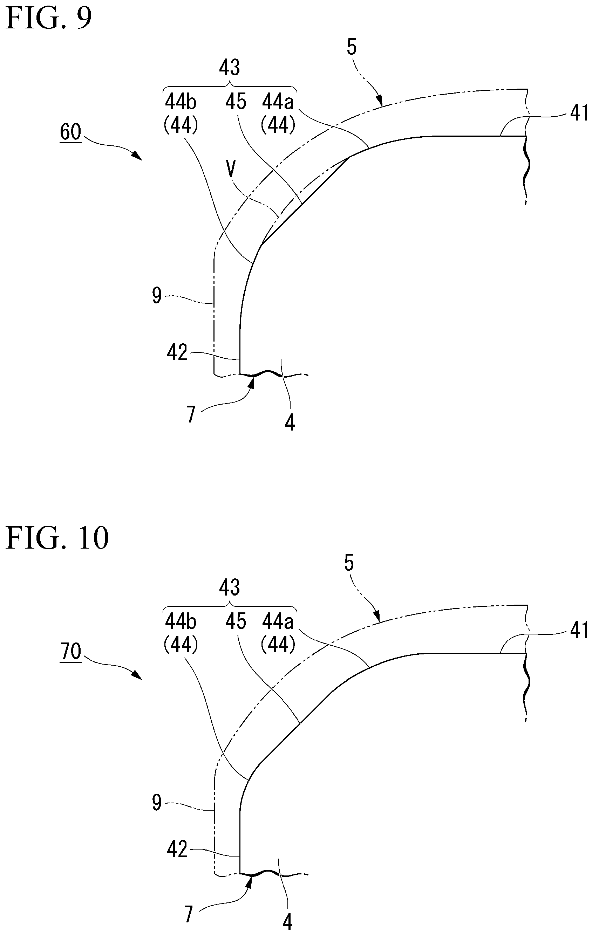

A non-pneumatic tire 60 according to a fifth embodiment associated with the present invention will be described below with reference to Fig. 9.

It should be noted that constituent elements of the fifth embodiment that are the same as those of the fourth embodiment will be denoted with reference numerals that are the same as those of the fourth embodiment, description thereof will be omitted, and only differences will be described.

In the non-pneumatic tire 60 according to this embodiment, a shoulder section 43 in an outer cylinder 4 is formed of two (a plurality of) circular arc sections 44 and one straight linear section 45. The two circular arc sections 44 have the same curvature when viewed in the vertical cross-sectional view. Centers of curvature of the two circular arc sections 44 are common. The straight linear section 45 is disposed between the two circular arc sections 44 and links the two circular arc sections 44 to each other. The straight linear section 45 extends straight when viewed in the vertical cross-sectional view. The circular arc sections 44 is connected to the straight linear section 45 with steps. The two circular arc sections 44 are disposed on a single circular arc V.

### (Sixth embodiment)

A non-pneumatic tire 70 according to a sixth embodiment associated with the present invention will be described below with reference to Fig. 10.

It should be noted that constituent elements of the sixth embodiment that are the same as those of the fifth embodiment will be denoted with reference numerals that are the same as those of the fifth embodiment, description thereof will be omitted, and only differences will be described.

In the non-pneumatic tire 70 according to this embodiment, two circular arc sections 44 have different curvatures when viewed in the vertical cross-sectional view. If a curvature of a first circular arc section 44a positioned on an inner side in the tire width direction is set to R1 and a curvature of a second circular arc section 44b positioned on an outer side in the tire width direction is set to R2, R2>R1 is satisfied. The second circular arc section 44b is in contact with a side section 42 from the outside in the tire radial direction. The circular arc sections 44 is in contact with a straight linear section 45 and the straight linear section 45 is positioned on a tangent line in the circular arc sections 44 when viewed in the vertical cross-sectional view. The circular arc sections 44 is smoothly connected to the straight linear section 45 without a step.

### (Seventh embodiment)

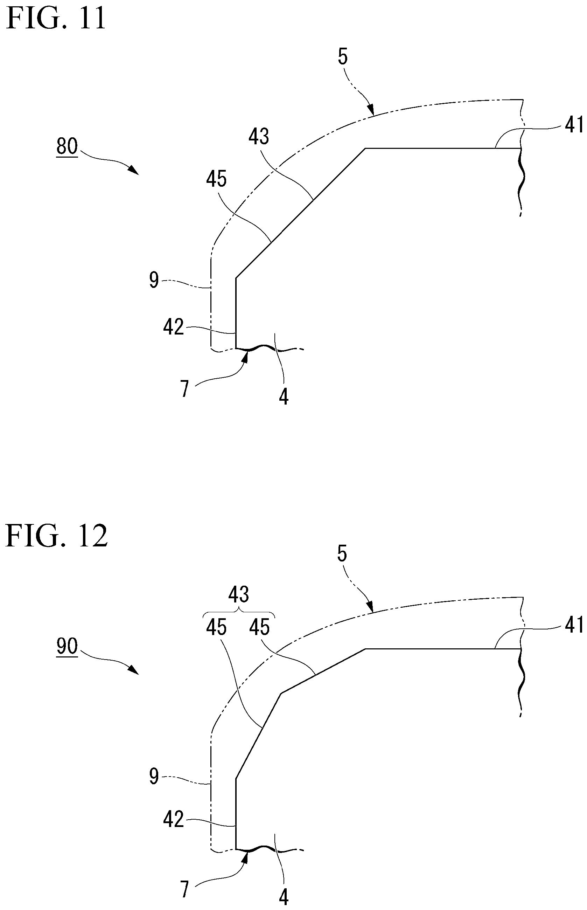

A non-pneumatic tire 80 according to a seventh embodiment associated with the present invention will be described below with reference to Fig. 11.

It should be noted that constituent elements of the seventh embodiment that are the same as those of the first embodiment will be denoted with reference numerals that are the same as those of the first embodiment, description thereof will be omitted, and only differences will be described.

In the non-pneumatic tire 80 according to this embodiment, a shoulder section 43 in an outer cylinder 4 is C-chamfered instead of being R-chamfered. The shoulder section 43 is formed of one straight linear section 45. The straight linear section 45 extends straight when viewed in the vertical cross-sectional view.

### (Eighth embodiment)

A non-pneumatic tire 90 according to an eighth embodiment associated with the present invention will be described below with reference to Fig. 12.

It should be noted that constituent elements of the eighth embodiment that are the same as those of the seventh embodiment will be denoted with reference numerals that are the same as those of the seventh embodiment, description thereof will be omitted, and only differences will be described.

In the non-pneumatic tire 90 according to this embodiment, a shoulder section 43 in an outer cylinder 4 is formed of a plurality of (two in the example illustrated in the drawing) straight linear sections 45.

Note that the technical scope of the present invention is not limited to the above embodiments and various modifications can be performed without departing from the scope of the present invention as defined by the claims.

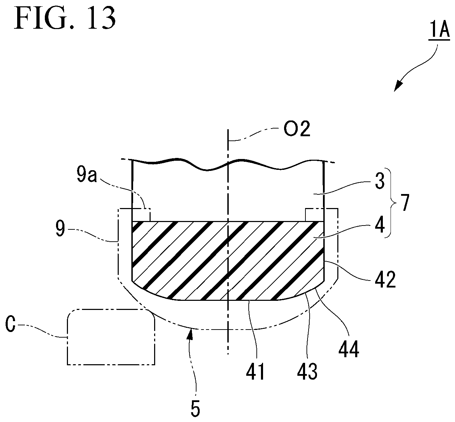

As in a non-pneumatic tire 1A according to a modification illustrated in Fig. 13, an inner end portion in the tire radial direction of a protective section 9 in a tread member 5 may extend inward in the tire width direction and this extending section 9a may cover an outer cylinder 4 from an inner side in the tire radial direction.

One protective section 9 may be provided instead of a pair of protective sections 9 and one of a pair of side sections 42 may be exposed and opened in the tire width direction. Furthermore, the protective section 9 may not cover a side section 42 over the entire region and, for example, may be intermittently disposed in the tire circumferential direction.

The side sections 42 may not be formed in a straight linear form in which the side sections 42 extend in the tire radial direction when viewed in the vertical cross-sectional view. For example, when viewed in the vertical cross-sectional view, the side sections 42 may be formed in a dot shape and the side sections 42 may not be formed in a planar shape in which the side sections 42 have a size in the tire radial direction.

In addition, it is possible to appropriately replace the constituent elements in the embodiments with known constituent elements without departing from the gist of the present invention and the above-mentioned modifications may be appropriately combined.

The inventors of the present invention has found that, when the non-pneumatic tire collides to ride on a curb (the non-pneumatic tire enters obliquely with respect to the curb), the tread member is placed between the curb and the shoulder section of the outer cylinder in an oblique direction in which the tread member is inclined with respect to the tire radial direction and damage, such as cracks, occurs in the portion placed therebetween.

According to this invention, the shoulder sections of the outer cylinder are chamfered. Therefore, when the non-pneumatic tire collides with a curb and the tread member is placed between the curb and the shoulder section of the outer cylinder, it is possible to relax the compressive stress occurring in the tread member. Thus, it is possible to minimize damage of the tread member occurring.

Also, if the tread member is placed between the curb and the shoulder section of the outer cylinder, the protective section which is a portion in the tread member configured to cover the side section attempts to swell inward in the tire radial direction. At this time, if, for example, the outer cylinder or the like is positioned on an inner side in the tire radial direction with respect to the protective section, the displacement of an end portion of the protective section positioned on the inner side in the tire radial direction is restricted, the end portion thereof functions as a fixed end, and the swelling deformation of the protective section in the tire radial direction is restricted. However, since the tread member covers the side section of the outer cylinder over the entire length in the tire radial direction, the displacement of an end portion of the protective section on the inner side in the tire radial direction is not restricted, the end portion thereof functions a free end, and the above-mentioned swelling deformation of the tread member is allowed. Thus, it is possible to further minimize damage of the tread member occurring.

The shoulder sections may be formed in a curved shape in which the shoulder sections protrude outward in the tire width direction and outward in the tire radial direction when viewed in the vertical cross-sectional view in both the tire width direction and the tire radial direction.

In this case, the shoulder sections of the outer cylinder are formed in a curved shape when viewed in the vertical cross-sectional view. Therefore, it is possible to further relax the compressive stress occurring in the tread member and it is possible to effectively minimize damage of the tread member occurring.

Each shoulder section includes a plurality of circular arc sections which are disposed in the tire width direction and have different curvatures when viewed in the vertical cross-sectional view. In addition, in the plurality of circular arc sections, the curvatures may gradually increase from the circular arc section positioned on an inner side in the tire width direction toward the circular arc section positioned on an outer side in the tire width direction.

In this case, in the plurality of circular arc sections, the curvature gradually increases from the circular arc section positioned on the inner side in the tire width direction toward the circular arc section positioned on the outer side in the tire width direction. Thus, it is possible to further relax the compressive stress occurring in the tread member.

The shoulder sections may be formed of the plurality of circular arc sections over the entire region in the tire width direction.

In this case, the shoulder section in the outer cylinder is formed of the plurality of circular arc sections over the entire region in the tire width direction. Therefore, since, for example, the plurality of circular arc sections are disposed such that the circular arc sections adjacent to each other in the tire width direction when viewed in the vertical cross-sectional view have a common tangent line at contact points between the circular arc sections, in other words, the circular arc sections adjacent to each other in the tire width direction are in contact with each other, it is possible to smoothly form the shoulder section in the outer cylinder without a step. Thus, it is possible to further relax the compressive stress occurring in the tread member.

The outer circumferential surface of the tread member may be formed in a curved shape in which the outer circumferential surface thereof protrudes outward in the tire radial direction when viewed in the vertical cross-sectional view.

In this case, the outer circumferential surface of the tread member is formed in a curved shape in which the outer circumferential surface thereof protrudes outward in the tire radial direction when viewed in the vertical cross-sectional view. Therefore, for example, even if the camber angle is increased in cornering or the like, it is possible to secure a ground contact area of the non-pneumatic tire.

Furthermore, each shoulder section of the outer cylinder is formed in a curved shape in which the shoulder section thereof protrudes outward in the tire width direction and outward in the tire radial direction when viewed in the vertical cross-sectional view. Therefore, as described above, when the camber angle is increased, it is possible to ground the shoulder section of the outer cylinder through the tread member without a sense of incongruity and to improve riding comfort.

### [Industrial Applicability]

According to the present invention, it is possible to minimize damage of the tread member occurring when the non-pneumatic tire collides with the curb.

### [Reference Signs List]

1, 10, 15, 50, 60, 70, 80, 90 Non-pneumatic tire
3 Linking member
4 Outer cylinder
5 Tread member
6 Inner cylinder
41 Outer circumferential section
42 Side section
43 Shoulder section
44 Circular arc section

## Claims

1. A non-pneumatic tire (1, 10, 15, 50, 60, 70, 80, 90), comprising:
an inner cylinder (6) attachable to an axle shaft;
an outer cylinder (4) configured to surround the inner cylinder (6) from the outside in a tire radial direction;
a linking member (3) configured to link the inner cylinder (6) to the outer cylinder (4); and
a tread member (5) externally fitted onto the outer cylinder,
wherein the outer cylinder (4) includes
an outer circumferential section (41) positioned on a tire equatorial line, the outer circumferential section (41) being an outer end portion of the outer cylinder in a tire radial direction, and formed in a straight linear form in which the outer circumferential section extends in the tire width direction when viewed in a vertical cross-sectional view,
side sections (42) that are outer end portions of the outer cylinder in the tire width direction, positioned on both sides in the tire width direction with respect to the outer circumferential section (41) and further inwardly in the tire radial direction than the outer circumferential section and formed in a straight linear form in which the side sections extend in the tire radial direction when viewed in the vertical cross-sectional view, and
shoulder sections (43) configured to connect the outer circumferential section to the side sections (42), wherein
the tread member (5) covers the outer circumferential section, the side sections (42), and the shoulder sections (43), and is fitted onto the outer cylinder (4),
, and
the inner cylinder (6) the linking members (3) and the outer cylinder (4) are integrally formed using a thermoplastic resin, **characterized in that**
each shoulder section (43) is chamfered.

2. The non-pneumatic tire (1, 10, 15, 50, 60, 70, 80, 90) according to claim 1, wherein the shoulder sections (43) are formed in a curved shape in which each of the shoulder sections (43) protrudes outward in the tire width direction and outward in the tire radial direction when viewed in a vertical cross-sectional view in both the tire width direction and the tire radial direction.

3. The non-pneumatic tire (1, 10, 15, 50, 60, 70, 80, 90) according to claim 2, wherein each shoulder section (43) includes a plurality of circular arc sections (44) which are disposed in the tire width direction and have different curvatures when viewed in the vertical cross-sectional view, and
in the plurality of circular arc sections (44), the curvatures gradually increase from the circular arc section (44a) positioned on an inner side in the tire width direction toward the circular arc section (44b) positioned on an outer side in the tire width direction.

4. The non-pneumatic tire (1, 10, 15, 50, 60, 70, 80, 90) according to claim 3, wherein the shoulder sections (43) are formed of the plurality of circular arc sections (44) over the entire region in the tire width direction.

5. The non-pneumatic tire (1, 10, 15, 50, 60, 70, 80, 90) according to any one of claims 2 to 4, wherein an outer circumferential surface of the tread member (5) is formed in a curved shape in which the outer circumferential surface thereof protrudes outward in the tire radial direction when viewed in the vertical cross-sectional view.

## Patentansprüche

1. Luftloser Reifen (1, 10, 15, 50, 60, 70, 80, 90), der Folgendes umfasst:
einen inneren Zylinder (6), der an einer Achswelle befestigt werden kann,
einen äußeren Zylinder (4), der dafür konfiguriert ist, den inneren Zylinder (6) von der in einer Reifenradialrichtung äußeren Seite aus zu umgeben,
ein Verknüpfungselement (3), das dafür konfiguriert ist, den inneren Zylinder (6) mit dem äußeren Zylinder (4) zu verknüpfen, und
ein Laufflächenelement (5), das außen an dem äußeren Zylinder angebracht ist,
wobei der äußere Zylinder (4) Folgendes einschließt:
eine äußere Umfangssektion (41), die auf einer Reifenäquatorlinie angeordnet ist, wobei die äußere Umfangssektion (41) ein in einer Reifenradialrichtung äußerer Endabschnitt des äußeren Zylinders ist und in einer geraden linearen Gestalt geformt ist, in der sich die äußere Umfangssektion in der Reifenbreitenrichtung erstreckt, wenn sie in einer vertikalen Querschnittsansicht betrachtet wird,
Seitensektionen (42), die in der Reifenbreitenrichtung äußere Endabschnitte des äußeren Zylinders sind, angeordnet auf beiden Seiten in der Reifenbreitenrichtung in Bezug auf die äußere Umfangssektion (41) und in der Reifenradialrichtung weiter nach innen als die äußere Umfangssektion und geformt in einer geraden linearen Gestalt, in der sich die Seitensektionen in der Reifenradialrichtung erstrecken, wenn sie in der vertikalen Querschnittsansicht betrachtet werden, und
Schultersektionen (43), die dafür konfiguriert sind, die äußere Umfangssektion mit den Seitensektionen (42) zu verbinden, wobei
das Laufflächenelement (5) die äußere Umfangssektion, die Seitensektionen (42) und die Schultersektionen (43) bedeckt und an dem äußeren Zylinder (4) angebracht ist,
und
der innere Zylinder (6), die Verknüpfungselemente (3) und der äußere Zylinder (4) unter Verwendung eines thermoplastischen Harzes integral geformt sind, **dadurch gekennzeichnet, dass**
jede Schultersektion (43) abgeschrägt ist.

2. Luftloser Reifen (1, 10, 15, 50, 60, 70, 80, 90) nach Anspruch 1, wobei die Schultersektionen (43) in einer gekrümmten Gestalt geformt sind, in der jede der Schultersektionen (43) in der Reifenbreitenrichtung nach außen und in der Reifenradialrichtung nach außen vorspringt, wenn sie in sowohl der Reifenbreitenrichtung als auch der Reifenradialrichtung in einer vertikalen Querschnittsansicht betrachtet werden.

3. Luftloser Reifen (1, 10, 15, 50, 60, 70, 80, 90) nach Anspruch 2, wobei jede Schultersektion (43) eine Vielzahl von kreisförmigen Bogensektionen (44) einschließt, die in der Reifenbreitenrichtung angeordnet sind und unterschiedliche Krümmungen aufweisen, wenn sie in der vertikalen Querschnittsansicht betrachtet werden, und
in der Vielzahl von kreisförmigen Bogensektionen (44) die Krümmungen von der kreisförmigen Bogensektion (44a), die auf einer in der Reifenbreitenrichtung inneren Seite angeordnet ist, hin zu der kreisförmigen Bogensektion (44b), die auf einer in der Reifenbreitenrichtung äußeren Seite angeordnet ist, allmählich zunehmen.

4. Luftloser Reifen (1, 10, 15, 50, 60, 70, 80, 90) nach Anspruch 3, wobei die Schultersektionen (43) über den gesamten Bereich in der Reifenbreitenrichtung aus der Vielzahl von kreisförmigen Bogensektionen (44) geformt sind.

5. Luftloser Reifen (1, 10, 15, 50, 60, 70, 80, 90) nach einem der Ansprüche 2 bis 4, wobei eine Außenumfangsfläche des Laufflächenelements (5) in einer gekrümmten Gestalt geformt ist, in der die Außenumfangsfläche desselben in der Reifenradialrichtung nach außen vorspringt, wenn sie in der vertikalen Querschnittsansicht betrachtet wird.

## Revendications

1. Bandage pneumatique sans air (1, 10, 15, 50, 60, 70, 80, 90), comprenant :
un cylindre intérieur (6) pouvant être fixé sur un arbre d'essieu ;
un cylindre extérieur (4) configuré pour entourer le cylindre intérieur (6) à partir de l'extérieur, dans une direction radiale du bandage pneumatique ;
un élément de liaison (3) configuré pour relier le cylindre intérieur (6) et le cylindre extérieur (4); et
un élément de bande de roulement (5) ajusté depuis l'extérieur sur le cylindre extérieur ;
dans lequel le cylindre extérieur (4) inclut :
une section circonférentielle externe (41) positionnée sur une ligne équatoriale du bandage pneumatique, la section circonférentielle externe (41) étant une partie d'extrémité externe du cylindre extérieur, dans une direction radiale du bandage pneumatique, et étant formée en une forme linéaire droit dans laquelle la section circonférentielle externe s'étend dans la direction de la largeur du bandage pneumatique, vue dans une vue en coupe verticale ;
des sections latérales (42) qui sont des parties d'extrémité externes du cylindre extérieur, dans la direction de la largeur du bandage pneumatique, positionnées sur les deux côtés, dans direction de la largeur du bandage pneumatique, par rapport à la section circonférentielle externe (41) et davantage vers l'intérieur, dans la direction radiale du bandage pneumatique, que la section circonférentielle externe, et formées en une forme linéaire droite dans laquelle les sections latérales s'étendent dans la direction radiale du bandage pneumatique, vues dans la vue en coupe verticale ; et
des sections d'épaulement (43) configurées pour raccorder la section circonférentielle externe aux sections latérales (42), dans lequel
l'élément de bande de roulement (5) recouvre la section circonférentielle externe, les sections latérales (42) et les sections d'épaulement (43) et est ajusté sur le cylindre extérieur (4),
et
le cylindre intérieur (6), les éléments de liaison (3) et le cylindre extérieur (4) sont formés d'une seule pièce en utilisant une résine thermoplastique ; **caractérisé en ce que**
chaque section d'épaulement (43) est chanfreinée.

2. Bandage pneumatique sans air (1, 10, 15, 50, 60, 70, 80, 90) selon la revendication 1, dans lequel les sections d'épaulement (43) sont formées en une forme courbée dans laquelle chacune des sections d'épaulement (43) fait saillie vers l'extérieur, dans la direction de la largeur du bandage pneumatique, et vers l'extérieur dans la direction radiale du bandage pneumatique, vue dans une vue en coupe verticale, dans la direction de la largeur du bandage pneumatique et dans la direction radiale du bandage pneumatique.

3. Bandage pneumatique sans air (1, 10, 15, 50, 60, 70, 80, 90) selon la revendication 2, dans lequel chaque section d'épaulement (43) inclut une pluralité de sections en arc circulaires (44) qui sont disposées dans la direction de la largeur du bandage pneumatique et présentent des courbures différentes, vues dans la vue en coupe verticale ; et
dans la pluralité de sections en arc circulaires (44), les courbures sont progressivement accrues de la section en arc circulaire (44a) positionnée sur un côté interne, dans la direction de la largeur du bandage pneumatique, vers la section en arc circulaire (44b) positionnée sur un côté externe, dans la direction de la largeur du bandage pneumatique.

4. Bandage pneumatique sans air (1, 10, 15, 50, 60, 70, 80, 90) selon la revendication 3, dans lequel les sections d'épaulement (43) sont formées à partir de la pluralité de sections en arc circulaires (44) sur l'ensemble de la région, dans la direction de la largeur du bandage pneumatique.

5. Bandage pneumatique sans air (1, 10, 15, 50, 60, 70, 80, 90) selon l'une quelconque des revendications 2 à 4, dans lequel une surface circonférentielle externe de l'élément de bande de roulement (5) est formée en une forme courbée dans laquelle sa surface circonférentielle externe fait saillie vers l'extérieur, dans la direction radiale du bandage pneumatique, vue dans la vue en coupe verticale.
